# EUROPÄISCHE PATENTANMELDUNG

(11) **EP 0 789 044 A1**
(43) Veröffentlichungstag der Anmeldung: **13.08.1997**
(21) Anmeldenummer: 96120042.5
(22) Anmeldetag: 13.12.1996
(51) Int. Cl.: C08G 18/80

(54) **Blockierte und kettenverlängerte Diisocyanataddukte, ein Verfahren zu ihrer Herstellung sowie deren Verwendung**

(30) Priorität: 07.02.1996 DE 19604326
(71) Anmelder: HÜLS AKTIENGESELLSCHAFT, 45764 Marl (DE)
(72) Erfinder: Gras, Rainer, Dr., 44879 Bochum (DE); Wolf, Elmar, Dr., 45661 Recklinghausen (DE)

(57) **Zusammenfassung**

Vollständig oder teilweise mit ε-Caprolactam blockierte und mit aliphatischen und/oder cycloaliphatischen Diaminen kettenverlängerte aliphatische Diisocyanataddukte, ein Verfahren zu ihrer Herstellung sowie deren Verwendung.

## Beschreibung

Gegenstand der vorliegenden Erfindung sind vollständig oder teilweise mit ε-Caprolactam blockierte und mit aliphatischen und/oder cycloaliphatischen Diaminen kettenverlängerte aliphatische Diisocyanataddukte, ein Verfahren zu ihrer Herstellung sowie deren Verwendung.

Zur Herstellung von witterungsbeständigen Polyurethanbeschichtungen sind aus der Vielzahl von Polyisocyanaten fast ausschließlich nur die ε-Caprolactam blockierten Addukte des Isophorondiisocyanats (IPDI) geeignet (DE-OS 35 36 017, Seite 2, Zeilen 13 bis 27).

Die Herstellung von PUR-Pulvern auf Basis von ε-Caprolactam blockierten aliphatischen Diisocyanaten bzw. deren isocyanuratgruppen-, biuretgruppen- und urethangruppenhaltigen Addukte war bis jetzt nicht möglich, da diese Verbindungen entweder nicht fest und daher nicht mahlbar sind, oder zwar fest sind, wie dies beim ε-Caprolactam blockierten Hexamethylendiisocyanat der Fall ist, aber dafür nach dem Homogenisieren mit dem Hydroxylgruppen enthaltenden Polyester im Kneter bei ca. 100 °C nur sehr verzögert wieder fest werden.

Solche Härter stellen eine willkommene Bereicherung der bereits vorhandenen PUR-Pulverhärter dar, da mit ihnen auf einfache Weise eine Maßschneiderung hinsichtlich der Flexibilität bei PUR-Pulvern ermöglicht würde.

Aufgabe der vorliegenden Erfindung war es deshalb, neue blockierte aliphatische Diisocyanataddukte bereitzustellen, die die Herstellung von PUR-Pulvern ermöglichen.

Überraschenderweise wurden solche PUR-Pulverhärter auf Basis aliphatischer Diisocyanate gefunden, indem man die aliphatischen Diisocyanate vor der Kettenverlängerung mit Diaminen vollständig oder teilweise mit ε-Caprolactam umsetzte und anschließend weiter mit Diaminen kettenverlängert.

Gegenstand der vorliegenden Erfindung sind somit vollständig oder teilweise mit ε-Caprolactam blockierte und mit aliphatischen und/oder cycloaliphatischen Diaminen kettenverlängerte aliphatische Diisocyanataddukte folgender Zusammensetzung: 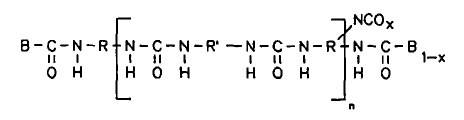
R: 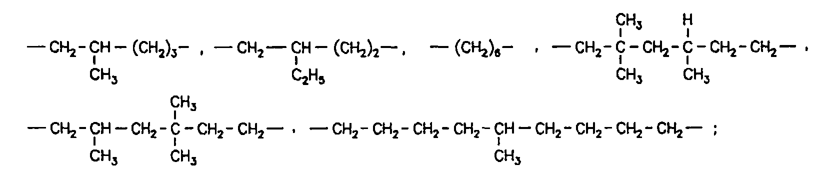
R': Alkylen- oder Cycloalkylen-Rest mit 2 - 16 C-Atomen;
B: 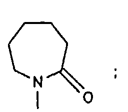
n = 1 - 3 ;
x = 0 - 0,5

Die erfindungsgemäßen Diisocyanataddukte besitzen bevorzugt ein Molekulargewicht, das in einem Bereich von 600 - 1400 variiert. Der Schmelzpunkt liegt bevorzugt zwischen 60 und 160 °C. Der Gehalt an Harnstoffgruppen liegt in der Regel zwischen 2 und 4 mmol/g. Der Gehalt an NCO-Gruppen die durch ε-Caprolactam blockiert sind beträgt üblicherweise 7 - 15 Gew.-%, vorzugsweise 8 - 12 Gew.-%, der Gehalt an freien NCO-Gruppen liegt bevorzugt zwischen 0,1 - 5 Gew.-%.

Die beschriebenen Diisocyanataddukte eignen sich als Härter für Epoxidharze auf Bisphenol A-Basis sowie für alle Verbindungen, die Zerewitinoff aktive Wasserstoffatome aufweisen. Die Aushärtung erfolgt oberhalb 160 °C, vorzugsweise bei 170 - 200 °C.

Ein weiterer Gegenstand der vorliegenden Erfindung ist ein Verfahren zur Herstellung der erfindungsgemäßen Verbindungen.

Nach diesem Verfahren werden die erfindungsgemäßen Verbindungen in zwei Stufen hergestellt, wobei in der 1. Stufe das aliphatische Diisocyanat mit ε-Caprolactam bei 80 - 150 °C umgesetzt wird, und nach beendeter Umsetzung die portionsweise Zudosierung des Diamins erfolgt. Nach erfolgter Diaminzugabe, die mit einer hohen Wärmeentwicklung verbunden ist, wird das Reaktionsprodukt zur Vervollständigung der Umsetzung noch ca. 1 h in der Schmelze weitererhitzt.

Bei dem erfindungsgemäßen Verfahren ist es unbedingt erforderlich, die Umsetzung in der angegebenen Reihenfolge - ε-Caprolactam-Blockierung des Diisocyanats und anschließende Umsetzung mit dem Diamin - durchzuführen.

Die erfindungsgemäßen Verbindungen enthalten aliphatische Diisocyanate wie z. B. Hexamethylendiisocyanat (HDI), 2-Methyl-pentamethylendiisocyanat (DI 51), das gegebenenfalls bis zu 10 Gew.-% 2-Ethyltetramethylendiisocyanat enthalten kann, 2.2.4(2.4.4)-Trimethylhexamethylendiisocyanat und 5-Methyl-nonamethylendiisocyanat.

Die erfindungsgemäß einsetzbaren Diamine sind nichtaromatischer Art. Sie enthalten 2 - 16 Kohlenstoffatome und zwei primäre Aminogruppen. Beispielhaft seien genannt: Ethylendiamin, Trimethylendiamin, Tetramethylendiamin, Hexamethylendiamin, Octamethylendiamin, 2-Methylpentamethylendiamin, 2.2.4(2.4.4)-Trimethylhexamethylendiamin, 1.4-Diaminocyclohexan, 2.4-Diamino-1-methylcyclohexan, 4.4'-Diaminodicyclohexylmethan (HMDA), 4.4'-Diamino-3.3'-dimethyldicyclohexylmethan (Laromin C 260) und Isophorondiamin (IPD).

Ein weiterer Gegenstand der vorliegenden Erfindung ist die Verwendung der erfindungsgemäßen Verbindungen in Kombination mit OH-Gruppen enthaltenden Polymeren als Bindemittel für lichtbeständige Polyurethan-Pulverbeschichtungen.

Die hitzehärtbare pulverförmige Masse, in der das erfindungsgemäße blockierte Diisocyanataddukt eingesetzt wird, enthält:
- a) 100 Gew.-T.: OH-gruppenhaltiges Polymer mit mehr als zwei OH-Gruppen
- b) 15 - 60 Gew.-T.: blockiertes Diisocyanataddukt gemäß der Erfindung
- c) 0 - 160 Gew.-T.: Pigmente
- d) 0 - 200 Gew.-T.: übliche Füllstoffe
- e) 0 - 5 Gew.-T.: Katalysator
- f) 0,5 - 5 Gew.-T.: Verlaufsmittel

Der Bestandteil a kann grundsätzlich jedes mehr als zwei OH-Gruppen enthaltende Polymer sein, das mindestens bei 70 °C schmilzt. Hierbei handelt es sich um Polyetherpolyole, Polyesteramidpolyole, Polyurethanpolyole, hydroxylierte Acrylharze usw., deren OH-Gruppen für die Vernetzung mit den erfindungsgemäßen blockierten aliphatischen Diisocyanataddukten bestimmt sind. Besonders bevorzugt sind unter den zahlreichen Möglichkeiten für Hydroxylgruppen tragende Polymere im Rahmen der Erfindung Polyesterpolyole. Solche Polyesterpolyole sollen ein Molgewicht zwischen 700 und 3000, vorzugsweise 1500 - 2500, und eine OH-Zahl von 25 - 240 mg KOH/g und eine OH-Funktionalität > 2 haben. Die Herstellung solcher Polyesterpolyole wird z. B. in den DE-OSS 19 57 483, 25 42 191, 30 04 876, 31 43 060 beschrieben.

Um die Geliergeschwindigkeit der hitzehärtbaren Massen zu erhöhen, kann man Katalysatoren zusetzen. Als Katalysatoren verwendet man üblicherweise Organozinnverbindungen wie z. B. Dibutylzinndilaurat, Zinn-II-octoat, Dibutylzinnmaleat usw. Die Menge an zugesetztem Katalysator beträgt 0,1 - 5 Gew.-% auf 100 Gew.-T. des Hydroxylgruppen tragenden Polymeren.

Die Isocyanatkomponente wird für die Herstellung von PUR-Pulverlacken mit dem geeigneten hydroxylgruppenhaltigen Polymeren und gegebenenfalls Katalysatoren sowie Pigmenten und üblichen Hilfsmitteln wie Füllstoffen und Verlaufsmitteln, z. B. Siliconöl, Acrylatharzen, gemischt und in der Schmelze homogenisiert. Dies kann in geeigneten Aggregaten wie z. B. beheizbaren Knetern, vorzugsweise jedoch durch Extrudieren, erfolgen, wobei Temperaturobergrenzen von 130 bis 140 °C nicht überschritten werden sollten. Die extrudierte Masse wird nach Abkühlen auf Raumtemperatur und nach geeigneter Zerkleinerung zum sprühfertigen Pulver vermahlen. Das Auftragen des sprühfertigen Pulvers auf geeignete Substrate kann nach den bekannten Verfahren wie z. B. durch elektrostatisches Pulversprühen Wirbelsintern, elektrostatisches Wirbelsintern, erfolgen. Nach dem Pulverauftrag werden die beschichteten Werkstücke zur Aushärtung 60 bis 4 Minuten auf eine Temperatur von 150 bis 220 °C, vorzugsweise 30 bis 6 Minuten bei 160 - 200 °C, erhitzt.

Die erfindungsgemäß hergestellten Überzüge zeichnen sich durch hervorragende Witterungsbeständigkeit und sehr gute Farbbeständigkeit aus. Mit den erfindungsgemäßen Pulvern ist es außerdem möglich, seidenmatte bis hochglänzende Beschichtungen herzustellen.

### A Allgemeine Herstellungsvorschrift für die erfindungsgemäßen Verbindungen

Das aliphatische Diisocyanat wird bei 100 °C vorgelegt und portionsweise so mit ε-Caprolactam versetzt, daß die Temperatur des Reaktionsgemisches nicht über 120 °C steigt. Nach erfolgter ε-Caprolactam-Zugabe wird noch so lange weitererhitzt, bis pro Mol ε-Caprolactam ein NCO-Äquivalent verbraucht wird. Danach erfolgt die portionsweise Zugabe des Diamins bei 120 - 150 °C, wobei es durchaus in manchen Fällen, und zwar dann, wenn der Schmelzpunkt des Reaktionsproduktes hoch liegt, zweckmäßig sein kann, bei Temperaturen oberhalb 150 °C zu arbeiten. Zur Vervollständigung der Umsetzung wird nach der Diaminzugabe noch ca. 0,5 h in der Schmelze weitererhitzt. Die in der Tabelle 1 aufgeführten Verbindungen wurden nach dieser Vorschrift hergestellt.

**Tabelle 1**

| **Harnstoffgruppenhaltige blockierte aliphatische Polyisocyanataddukte** | | | | | | | | | |
|---|---|---|---|---|---|---|---|---|---|
| **Beispiel A** | **Zusammensetzung in mol** | | | | | **Chemische und physikalische Kenndaten** | | | |
| | **Diisocyanat** | | **Caprolactam** | **Diamin** | | **NCO-Gehalt [Gew.-%]** | | **Schmelzbereich [°C]** | **Glasumwandlungstemperatur [°C]** |
| | **DI 51** | **HDI** | | | | **frei** | **gesamt** | | |
| 1 | 2 | - | 1,5 | IPD | (1,25) | 0,3 | 8,5 | 118 - 120 | 48 - 67 |
| 2 | - | 1,75 | 1,5 | IPD | (1) | 0,4 | 9,7 | 96 - 98 | 38 - 60 |
| 3 | - | 1,85 | 1,5 | HMDA | (1) | 1,6 | 10,2 | 107 - 109 | 40 - 60 |
| 4 | 1,85 | - | 1,5 | HMDA | (1) | 1,6 | 10,2 | 106 - 109 | 41 - 61 |
| 5 | - | 2 | 2 | Laromin C 260 | (1) | 0,4 | 10,3 | 77 - 79 | 31 - 57 |
| 6 | - | 2 | 2 | HMDA | (1) | 0,3 | 10,7 | 128 - 130 | 69 - 85 |
| 7 | - | 1,85 | 1,5 | IPD | (1) | 1,4 | 10,8 | 92 - 95 | 41 - 60 |
| 8 | 2 | - | 2 | IPD | (1) | 0,5 | 11,2 | 75 - 78 | 39 - 48 |
| 9 | - | 2 | 2 | IPD | (1) | 0,5 | 11,0 | 72 - 74 | 33 - 60 |
| 10 | - | 2 | 1,5 | IPD | (1) | 3,0 | 12,0 | 96 - 99 | 39 - 57 |
| 11 | - | 2,5 | 2 | HMDA | (1,5) | 0,5 | 12,8 | 144 - 147 | 97 - 110 |
| 12 | 2 | - | 2 | Laromin C 260 | (1) | 0,3 | 10,3 | 103 - 107 | 38 - 59 |
| 13 | 2 | - | 1,5 | IPD | (1) | 3,5 | 11,9 | 94 - 101 | 42 - 61 |
| 14 | 2 | - | 2 | HMDA | (1) | 0,4 | 10,5 | 121 - 127 | 62 - 79 |

### B Polyolkomponente

### Allgemeine Herstellungsvorschrift

Die Ausgangskomponenten - Terephthalsäure (TS), Dimethylterephthalat (DMT), Hexandiol-1.6 (HD), Neopentylglykol (NPG), 1.4-Dimethylolcyclohexan (DMC) und Trimethylolpropan (TMP) - werden in einen Reaktor gegeben und mit Hilfe eines Ölbades erwärmt. Nachdem die Stoffe zum größten Teil aufgeschmolzen sind, werden bei einer Temperatur von 160 °C 0,5 Gew.-% Di-n-butylzinnoxid als Katalysator zugesetzt. Die erste Methanolabspaltung tritt bei einer Temperatur von ca. 170 °C auf. Innerhalb 6 bis 8 Stunden wird die Temperatur auf 220 bis 230 °C erhöht, und innerhalb weiterer 12 bis 15 Stunden die Reaktion zu Ende geführt. Der Polyester wird auf 200 °C abgekühlt und durch Anlegen von Vakuum (1,33 mbar) innerhalb 30 bis 45 Minuten weitgehend von flüchtigen Anteilen befreit. Während der gesamten Reaktionszeit wird das Sumpfprodukt gerührt und ein schwacher N₂-Strom durch das Reaktionsgemisch geleitet.

Tabelle 2 gibt Polyesterzusammensetzungen und Polyester des Marktes mit den entsprechenden physikalischen und chemischen Kenndaten wieder.

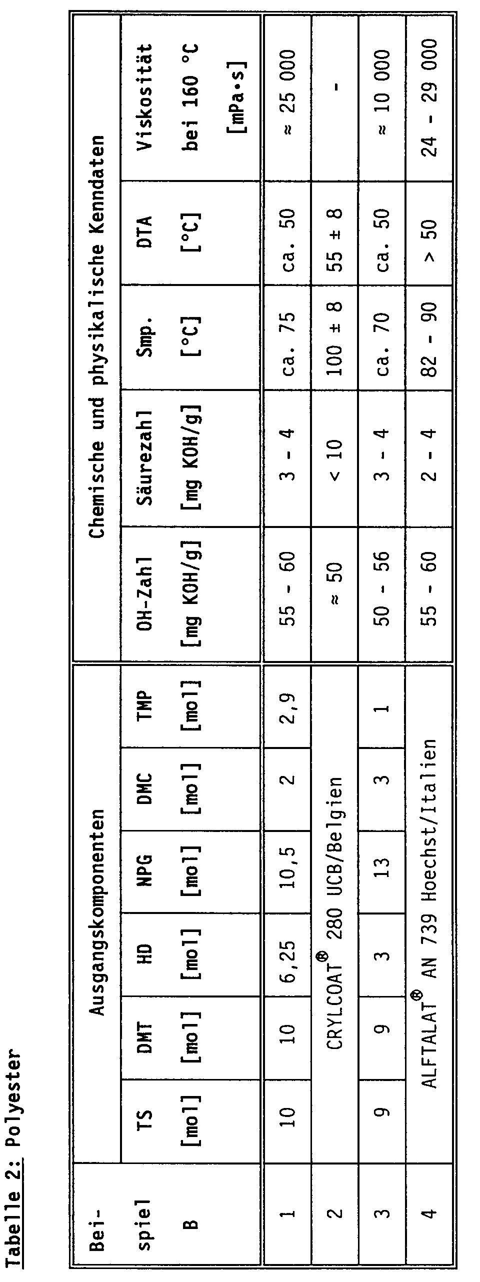

### C Polyurethan-Pulverlacke

### Allgemeine Herstellungsvorschrift

Die zerkleinerten Produkte - blockierte Isocyanataddukte (Vernetzer), Polyester, Verlaufsmittel- und ggf. Katalysator-Masterbatch - werden ggf. mit dem Weißpigment in einem Kollergang innig vermischt und anschließend im Extruder bis maximal 130 °C homogenisiert. Nach dem Erkalten wird das Extrudat gebrochen und mit einer Stiftsmühle auf eine Korngröße < 100 µm gemahlen. Das so hergestellte Pulver wird mit einer elektrostatischen Pulverspritzanlage bei 60 KV auf entfettete, ggf. Vorbehandelte Eisenbleche appliziert und in einem Umlufttrockenschrank bei Temperaturen zwischen 160 und 200 °C eingebrannt.

### Verlaufsmittel-Masterbatch

Es werden 10 Gew.-% des Verlaufsmittels - ein handelsübliches Copolymer von Butylacrylat und 2-Ethylhexylacrylat - in dem entsprechenden Polyester in der Schmelze homogenisiert und nach dem Erstarren zerkleinert.

### Katalysator-Masterbatch

Es werden 5 Gew.-% des Katalysators - DBTL - in dem entsprechenden Polyester in der Schmelze homogenisiert und nach dem Erstarren zerkleinert.

Die Abkürzungen in den folgenden Tabellen bedeuten:
- SD =: Schichtdicke in µm
- ET =: Tiefung nach Erichsen in mm (DIN 53 156)
- GS =: Gitterschnittprüfung (DIN 53 151)
- GG 60 °∢ =: Messung des Glanzes nach Gardner (ASTM-D 5233) in Skalenteilen
- Imp. rev.=: Impact reverse in g·m

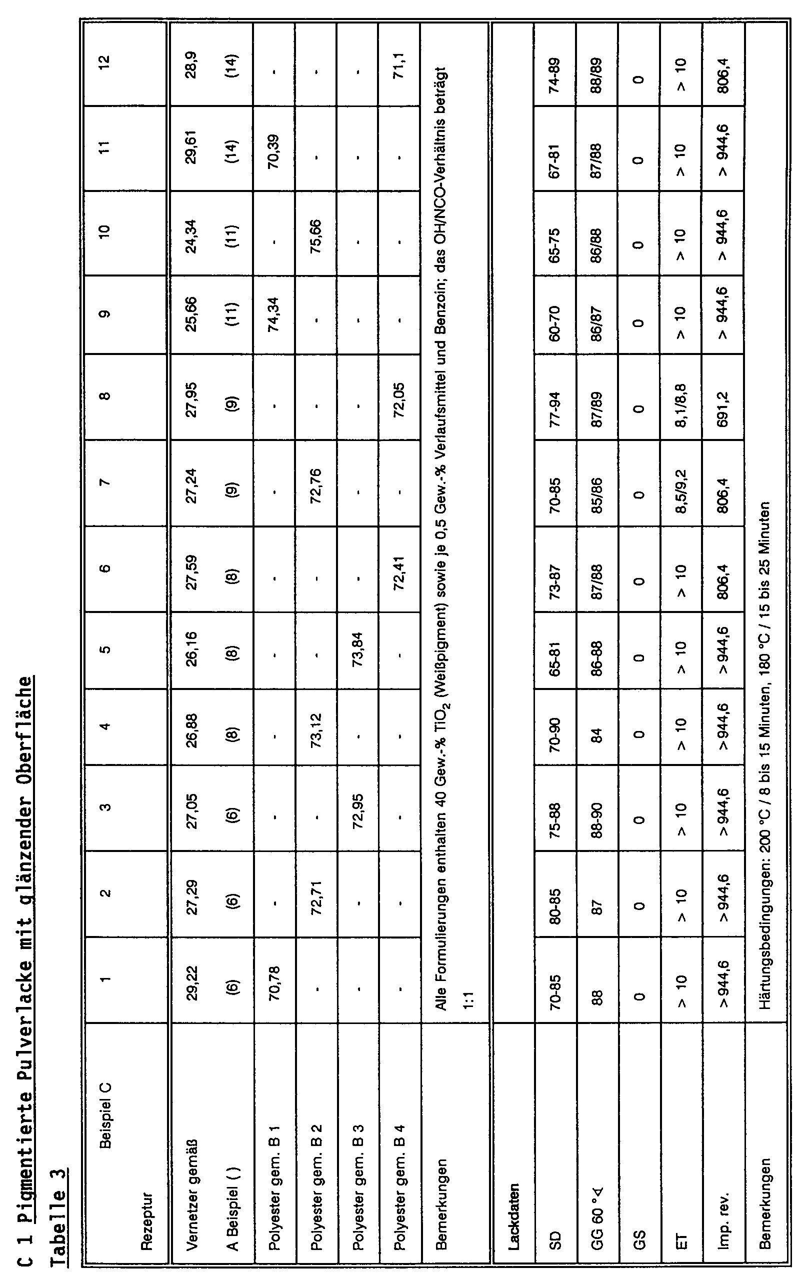

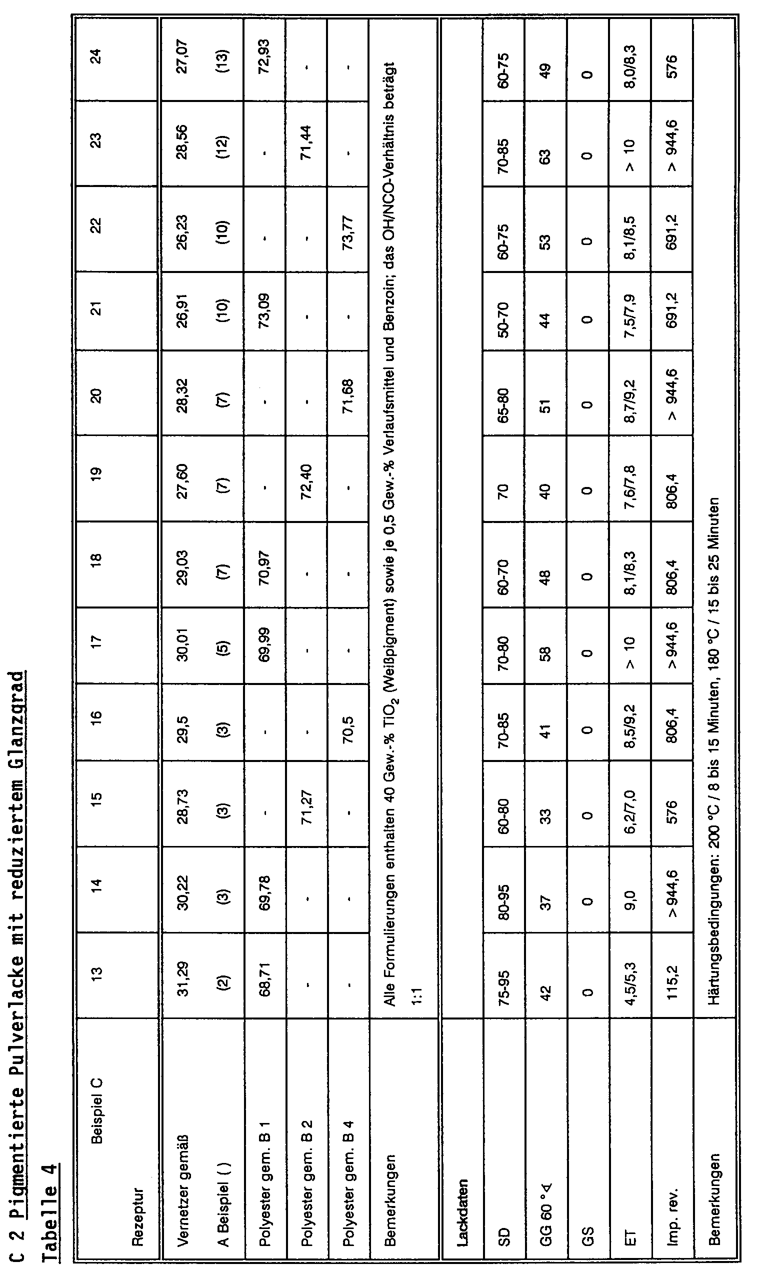

## Patentansprüche

1. Vollständig oder teilweise mit ε-Caprolactam blockierte und mit aliphatischen und/oder cycloaliphatischen Diaminen kettenverlängerte aliphatische Diisocyanataddukte folgender Zusammensetzung: 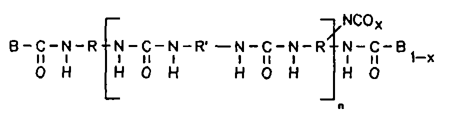
R: 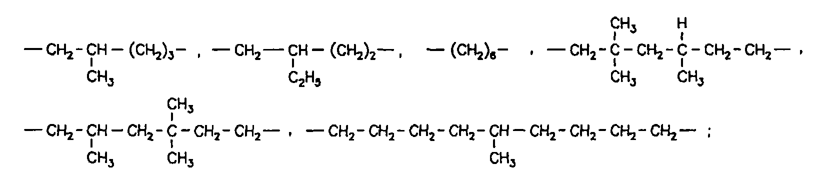
R': Alkylen- oder Cycloalkylen-Rest mit 2 - 16 C-Atomen;
B: 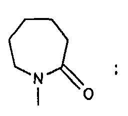
n = 1 - 3 ;
x = 0 - 0,5

2. Diisocyanataddukte nach Anspruch 1,
dadurch gekennzeichnet,
daß das Molekulargewicht zwischen 600 - 1 400 variiert, der Schmelzpunkt 60 - 160 °C, der Gehalt an Harnstoffgruppen 2 - 4 mmol/g, der blockierte NCO-Gehalt 7 - 15 Gew.-% und der freie NCO-Gehalt 0,1 - 5 Gew.-% beträgt.

3. Diisocyanataddukte nach den Ansprüchen 1 bis 2,
dadurch gekennzeichnet,
daß als Ausgangskomponente Diisocyanate ausgewählt aus der Gruppe Hexamethylendiisocyanat (HDI), 2-Methyl-pentamethylendiisocyanat (DI 51), das gegebenenfalls bis zu 10 Gew.-% 2-Ethyltetramethylendiisocyanat enthalten kann, 2.2.4(2.4.4)-Trimethylhexamethylendiisocyanat und 5-Methyl-nonamethylendiisocyanat, eingesetzt werden.

4. Diisocyanataddukte nach den Ansprüchen 1 bis 3,
dadurch gekennzeichnet,
daß als Ausgangskomponente nichtaromatische Diamine mit 2 - 16 Kohlenstoffatomen und zwei primären Aminogruppen eingesetzt werden.

5. Diisocyanataddukte nach den Ansprüchen 1 bis 4,
dadurch gekennzeichnet,
daß als Diamine Ethylendiamin, Trimethylendiamin, Tetramethylendiamin, Hexamethylendiamin, Octamethylendiamin, 2-Methylpentamethylendiamin, 2.2.4(2.4.4)-Trimethylhexamethylendiamin, 1.4-Diaminocyclohexan, 2.4-Diamino-1-methylcyclohexan, 4.4'-Diaminodicyclohexylmethan (HMDA), 4.4'-Diamino-3.3'-dimethyldicyclohexylmethan (Laromin C 260) und Isophorondiamin (IPD), eingesetzt werden.

6. Verfahren zur Herstellung der erfindungsgemäßen Verbindungen gemäß den Ansprüchen 1 bis 5,
dadurch gekennzeichnet,
daß das aliphatische Diisocyanat zuerst mit ε-Caprolactam bei 80 - 150 °C umgesetzt wird und danach die Reaktion unter portionsweiser Zugabe des Diamins erfolgt.

7. Verwendung der erfindungsgemäßen Verbindungen zur Herstellung von hitzehärtbaren Polyurethan-Pulvern.

8. Hitzehärtbare pulverförmige Massen, enthaltend
a) 100 Gew.-T. OH-gruppenhaltiges Polymer mit mehr als zwei OH-Gruppen
b) 15 - 60 Gew.-T. blockiertes Diisocyanataddukt gemäß den Ansprüchen 1 bis 5
c) 0 - 160 Gew.-T. Pigmente
d) 0 - 200 Gew.-T. übliche Füllstoffe
e) 0 - 5 Gew.-T. Katalysator
f) 0,5 - 5 Gew.-T. Verlaufsmittel

9. Hitzehärtbare pulverförmige Massen,
dadurch gekennzeichnet,
daß sie als Komponente a Polyesterpolyole mit einem Molgewicht zwischen 700 und 3000, vorzugsweise 1500 - 2500, und eine OH-Zahl von 25 - 240 mg KOH/g und eine OH-Funktionalität > 2 haben.

10. Hitzehärtbare pulverförmige Massen,
dadurch gekennzeichnet,
daß sie Katalysatoren enthalten.

11. Hitzehärtbare pulverförmige Massen,
dadurch gekennzeichnet,
daß als Katalysatoren Dibutylzinndilaurat, Zinn-II-octoat, Dibutylzinnmaleat, enthalten sind.

12. Vollständig oder teilweise mit ε-Caprolactam blockierte und mit aliphatischen und/oder cycloaliphatischen Diaminen kettenverlängerte aliphatische Diisocyanataddukte, erhältlich durch Umsetzung der Diisocyanatkomponente mit ε-Caprolactam und anschließend mit Diaminen.
